# EUROPÄISCHE PATENTANMELDUNG

(11) **EP 3 361 341 A1**
(43) Veröffentlichungstag der Anmeldung: **15.08.2018**
(21) Anmeldenummer: 17155889.3
(22) Anmeldetag: 13.02.2017
(51) Int. Cl.: G05B 23/02

(54) **VERFAHREN ZUR ÜBERWACHUNG DER ZUSTÄNDE VON GERÄTEN EINES AUTOMATISIERUNGSSYSTEMS SOWIE OPERATOR-SYSTEM**

(71) Anmelder: Siemens Aktiengesellschaft, 80333 München (DE)
(72) Erfinder: Lutz, Benjamin, 76327 Pfinztal (DE)

(57) **Zusammenfassung**

Die Erfindung betrifft Verfahren zur Überwachung der Zustände von Geräten eines Automatisierungssystems, wobei in Prozessabbildern (20) von zur Prozessführung und -beobachtung vorgesehenen Operator-Systemen (2, 3, 4) den Geräten zugeordnete Prozessobjekte gespeichert sind, in welchen Prozessdaten (25, 26) der Geräte hinterlegt sind. Es werden Maßnahmen vorgeschlagen, mittels der online (unmittelbar) auf ungünstige Maschinenzustände reagiert werden kann, um eine möglichst lange und zuverlässige Betriebsdauer der Maschine zu gewährleisten. Dies bedeutet, dass Anlagenstillstände weitgehend vermieden sowie Stillstandzeiten minimiert werden.

## Beschreibung

Die Erfindung betrifft ein Verfahren zur Überwachung der Zustände von Geräten eines Automatisierungssystems, wobei in Prozessabbildern von zur Prozessführung und -beobachtung vorgesehenen Operator-Systemen den Geräten zugeordnete Prozessobjekte gespeichert sind, in welchen Prozessdaten der Geräte hinterlegt sind. Die Erfindung betrifft ferner ein Operator-System gemäß dem Oberbegriff des Anspruchs 4 zur Durchführung des Verfahrens.

Aus dem Siemens-Katalog "ST PCS7", Kapitel 5, Ausgabe 2016 ist ein Operator-System eines Automatisierungs- bzw. Prozessleitsystems bekannt, welches mindestens einen Operator-Server und mindestens einen Operator-Client aufweist. Dieses Operator-System ist dazu ausgebildet, eine komfortable und sichere Prozessführung zu ermöglichen, wobei ein Operator den Prozessablauf beobachten und bei Bedarf steuernd eingreifen kann. Dazu sind für die Komponenten bzw. Geräte des Automatisierungssystems Prozessobjekte eines Prozessabbildes vorgesehen, in denen die Prozesseingangswerte von Sensoren und die Prozessausgangswerte für Aktuatoren hinterlegt sind. Ferner sind dazu auf dem Operator-Client den Prozessobjekten entsprechende Bildobjekte visualisierbar, wodurch dem Operator Änderungen am Prozessablauf angezeigt werden.

Um die Zustände der Geräte, z. B. Geräte in Form eines Motors, einer Maschine, einer Pumpe, eines Lüfters, eines Ventils oder eines Stellgerätes, zu überwachen, kann auf archivierte Prozesseingangs- und Prozessausgangswerte des Leitsystems aufgesetzt werden. Eine Zustandsüberwachung "vermascht" die archivierten Daten mit separat aufgezeichneten Daten, was bedeutet, dass die archivierten und die aufgezeichneten Daten in einer bestimmten Art und Weise in Zusammenhang gebracht werden. Die Auswertung der Zustände der Geräte kann nicht während der Prozesssteuerung bzw. nicht zur Laufzeit sondern nur offline bewerkstelligt werden. Dadurch ist es nicht möglich, unmittelbar auf einen ungünstigen Betriebszustand eines Gerätes zu reagieren. Mittels derartiger Maßnahmen ist der Fokus darauf beschränkt, etwas über den zukünftigen Zustand der Geräte für eine etwaige Wartung zu prognostizieren.

Der Erfindung liegt daher die Aufgabe zugrunde, ein Verfahren der eingangs genannten Art anzugeben, mittels dessen während des Betriebs bzw. der Prozesssteuerung eine zeitnahe und/oder vorausschauende Zustandsüberwachung eines Gerätes des Automatisierungssystems ermöglicht wird. Darüber hinaus ist ein Operator-System gemäß dem Oberbegriff des Anspruchs 4 zu schaffen, welches zur Durchführung des Verfahrens geeignet ist.

Diese Aufgabe wird im Hinblick auf das Verfahren durch die im kennzeichnenden Teil des Anspruchs 1 angegebenen, bezüglich des Operator-Systems durch die im kennzeichnenden Teil des Anspruchs 4 angegebenen Maßnahmen gelöst.

Vorteilhaft ist, dass eine vorausschauende Zustandsüberwachung eines Gerätes in einem Operator-System integriert ist. Es kann online (unmittelbar) auf ungünstige Maschinenzustände reagiert werden, um eine möglichst lange und zuverlässige Betriebsdauer der Maschine zu gewährleisten. Dies bedeutet, dass Anlagenstillstände weitgehend vermieden sowie Stillstandzeiten minimiert werden.

Weitere vorteilhafte Ausgestaltungen der Erfindung ergeben sich aus den Unteransprüchen.

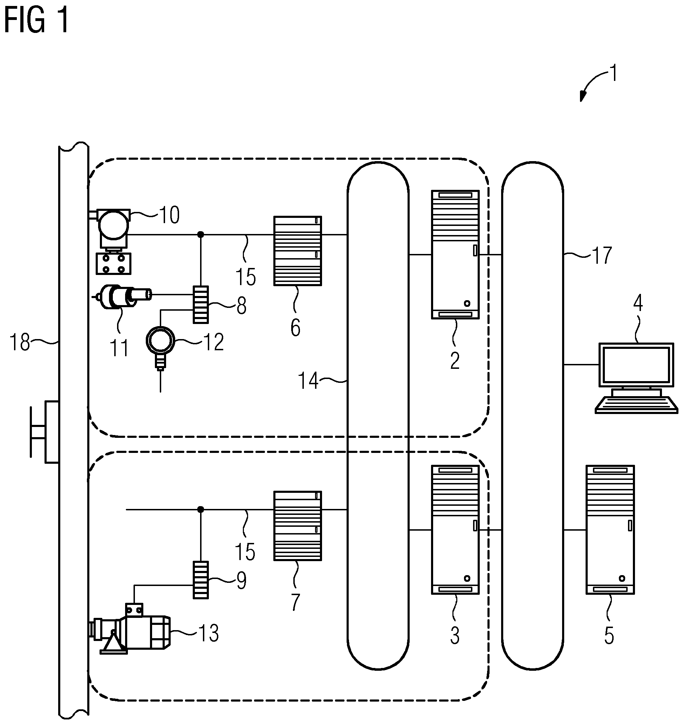

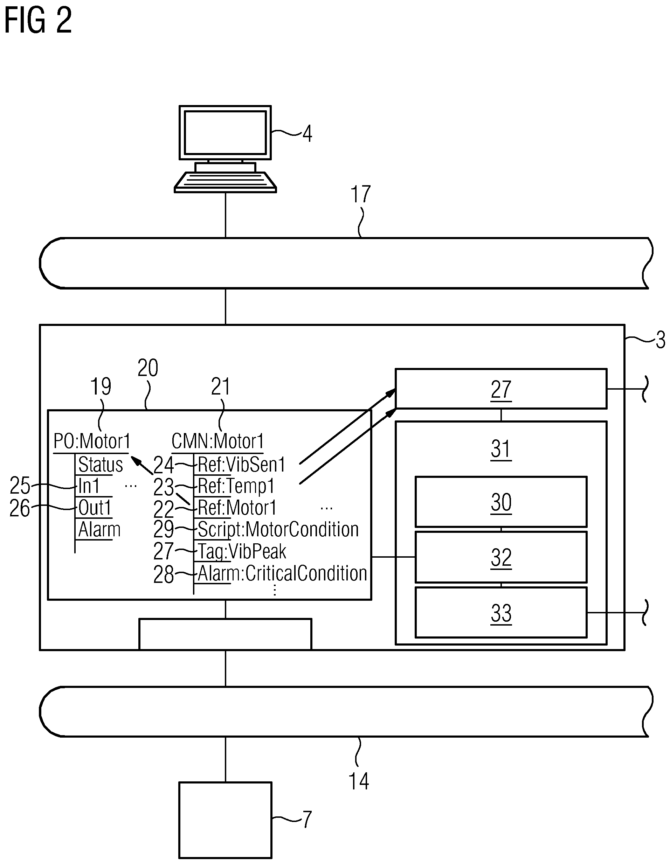

Die Erfindung, deren Ausgestaltungen sowie Vorteile werden nachfolgend anhand eines Ausführungsbeispiels unter Bezugnahme auf die Figuren 1 und 2 der Zeichnung näher erläutert. Diese zeigen in einer vereinfachten Form Bestandteile eines Prozessleitsystems, wobei die in den Figuren 1 und 2 dargestellten gleichen Teile mit gleichen Bezugszeichen versehen sind.

Im vorliegenden Ausführungsbeispiel umfasst ein Prozessleitsystem 1 Operator-Server 2, 3, einen Operator-Client 4, einen Archiv-Server 5 sowie weitere Automatisierungskomponenten. Diese weiteren Automatisierungskomponenten sind als Automatisierungsgeräte bzw. speicherprogrammierbare Steuerungen (PLC - Programmable Logic Controller) 6,7, als dezentrale Peripherien 8, 9 sowie als Feldgeräte in Form eines Durchflussmessers 10, eines Vibrationssensors 11, eines Temperatursensors 12 und eines Motors bzw. einer Pumpe 13 ausgebildet. Das Prozessleitsystem 1 kann selbstverständlich eine Vielzahl von Automatisierungsgeräten aufweisen, die einerseits über einen Plant Bus 14 mit den Operator-Servern 2, 3 und andererseits über einen weiteren Bus 15, z. B. über einen so genannten Profibus DP, mit dem Durchflussmesser 10 und den dezentralen Peripherien 8, 9 verbunden sind. An die dezentralen Peripherien 8, 9 sind über geeignete (HART-) Schnittstellen die Sensoren 11, 12 sowie die Pumpe 13 und eine Vielzahl von weiteren hier nicht dargestellten Sensoren und/oder Aktuatoren angeschlossen. Die Operator-Server 2, 3, die mit dem Operator-Client 4 jeweils ein Operator-System bilden, kommunizieren über einen Terminal-Bus 17 mit weiteren, ebenfalls hier nicht dargestellten Komponenten des Prozessleitsystems 1, beispielsweise Komponenten in Form eines Engineering-Systems, eines Batch-Systems oder eines Maintenance-Systems.

Es wird im Folgenden angenommen, dass der Zustand des Motors bzw. der Pumpe 13 zu überwachen ist. Um den Zustand der Pumpe 13 besser überwachen und bewerten zu können, werden im Rahmen dieser Überwachung nicht nur Prozessdaten (Prozesseingangswerte, Prozessausgangswerte) dieser Pumpe 13 sondern auch Prozessdaten weiterer Komponenten berücksichtigt. Im Hinblick auf die Zustandsüberwachung der Pumpe 13 repräsentieren die Prozessdaten der Pumpe 13 so genannte primäre Prozessdaten und die Prozessdaten der weiteren Komponenten so genannte sekundäre Prozessdaten. Eine Störung der Pumpe 13 beeinflusst diese sekundären Prozessdaten, wodurch diese Daten zur Bewertung des Zustandes der Pumpe 13 geeignet sind.
Im vorliegenden Ausführungsbeispiel wirkt sich eine Pumpenstörung auf die Prozessdaten bzw. Prozesswerte des Durchflussmessers 10, des Vibrationssensors 11 und des Temperatursensors 12 aus. Beispielweise für den Fall, dass in der Pumpe 13 aufgrund einer zu starken Pumpenleistung bei einer entsprechenden Umgebungstemperatur eine Störung in Form einer Kavitation hervorgerufen wird, wirkt sich dies in einer Pipeline 18 durch eine verstärkte Vibration aus, die der Vibrationssensor 11 erfasst.

Zur Überwachung und Bewertung des Zustands der Pumpe 13 während der Prozessteuerung, ist einem Prozessobjekt 19 der Pumpe 13 in einem Prozessabbild 20 des Operator-Servers 5 des Operator-Systems 3, 4 ein Komponente in Form einer CMN-Instanz 21 zugeordnet. Diese CMN-Instanz 21 wurde im Rahmen eines Engineerings bzw. im Rahmen einer Engineering-Phase mittels eines Engineering-Systems des Prozessleitsystems 1 erstellt und dem Prozessobjekt 19 zugewiesen. Die CMN-Instanz 21 ist mit Referenzen 22, 23, 24 versehen, die auf das Prozessobjekt 19 der Pumpe 13 und auf hier nicht dargestellte, in einem Prozessabbild des Operator-Servers 2 des Operator-Systems 2, 4 hinterlegte Prozessobjekte des Durchflussmessers 10, des Vibrationssensors 11 und des Temperatursensors 12 verweisen. Aufgrund dieser Referenzierung werden zur Zustandsüberwachung der Pumpe 13 sowohl die primären Prozessdaten 25, 26 des Prozessobjektes 19 des Motors 13 und die sekundären Prozessdaten der Prozessobjekte des Durchflussmessers 10, des Vibrationssensors 11 und des Temperatursensors 12 berücksichtigt. Dazu liest die CMN-Instanz 21 einerseits die primären Prozessdaten 25, 26 im Prozessobjekt 19 und anderseits über einen Verteiler 27 und einer hier nicht dargestellten Überwachungskomponente des Operator-Servers 2 die sekundären Prozessdaten ein, wobei - wie erläutert - diese sekundären Prozessdaten in den Prozessobjekten des Durchflussmessers 10, des Vibrationssensors 11 und des Temperatursensors 12 eines auf dem Operator-Server 2 hinterlegten Prozessabbildes gespeichert sind. Dies bedeutet, dass die CMN-Instanz 21 auf alle erforderlichen Prozessobjekte in einem "verteilten" Prozessabbild eines Leitsystems - im vorliegenden Beispiel auf die in den Operator-Servern 2, 3 hinterlegten Prozessabbilder - referenziert, die in die Betrachtung und Bewertung der Zustandsüberwachung eines Gerätes mit einzubeziehen sind.

Die CMN-Instanz 21 umfasst ferner einen Tag 27, einen Alarm 28 und ein Script 29 (Motor Condition), in welchem Befehle und Anweisungen zur Verarbeitung der primären und sekundären Prozessdaten hinterlegt sind und das beschreibt, wie die referenzierten Prozessdaten auf den Tag 27 und den Alarm 28 umzurechnen bzw. abzubilden sind. Eine Script Engine 30 einer Überwachungskomponente 31 (Condition Monitoring Services) des Operator-Servers 3 führt das das Script 29 aus und verarbeitet die Befehle und Anweisungen, um aufgrund aller erfassten primären und sekundären Prozessdaten eine Aussage über den Zustand der Pumpe 13 zu treffen.

Ein Subscription Handler 32 der Überwachungskomponente 31 ist dazu ausgebildet, sich lokal an dem Prozessobjekt 19 und über den Verteiler 27 und der Überwachungskomponente 31 des Operator-Servers 2 verteilt an den Prozessobjekten des Prozessabbildes des Operator-Servers 2 anzumelden, um aufgrund von Änderungen an den primären und sekundären Prozessdaten die Script Engine 30 für neue Verarbeitungen bzw. Auswertungen anzustoßen bzw. zu triggern. Darüber hinaus schreibt der Subscription Handler 32 die Auswerteergebnisse in Form von Tags und Alarmen in die CMN-Instanz 21 zurück.

Für den Fall, das für die Überwachung, Bewertung, Ermittlung oder Berechnung eines Gerätezustands auch historische Prozessdaten benötigt werden, erzeugt der Subscription Handler 32 eine geeignete Anfrage, die ein PH-Client 33 ("Process Historian") der Überwachungskomponente 31 dem Archiv-Server 5 weiterleitet, welcher aufgrund der Anfrage die entsprechenden archivierten Prozessdaten der Überwachungskomponente 31 übermittelt.

Selbstverständlich können neben den erläuterten primären und sekundären Prozessdaten weitere Daten oder Parameter in die Überwachung, Bewertung, Ermittlung oder Berechnung des Gerätezustands einfließen. Beispielsweise kann mit einfließen, ob die Pumpe 13 überhaupt in Betrieb ist oder wie hoch die elektrische Leistungsaufnahme der eingeschalteten Pumpe ist. Für den Fall, dass aufgrund all dieser Daten ein kritischer Zustand des Motors abgeleitet (z.B. Kavitation im Motor) wird, wird neben den berechneten bzw. ermittelten Ergebnissen auch ein entsprechender Alarm erzeugt, durch den ein Operator akustisch und/oder visuell informiert wird, um beispielsweise mittels geeigneter Handlungen den Motor aus dem kritischen Zustand zu fahren.

Ohne die beschriebenen Maßnahmen könnten Störungen zur Laufzeit nicht erkannt werden. Eine Kavitation der Pumpe bliebe unentdeckt und würde zu einem erhöhten Verschleiß oder gar zur Beschädigung der Pumpe führen. Dadurch, dass auch auf historische Daten zugegriffen werden kann, können Aussagen über eine anstehende Wartung gemacht werden. Für den Fall, dass sich beispielsweise der Vibrationspegel in jüngster Vergangenheit sukzessive und allmählich erhöht hat oder der Motor bei einer zunehmend höheren Umgebungstemperatur betrieben wurde, so muss der Wartungszyklus entsprechend verkürzt werden, um Ausfällen vorzubeugen.

Vorteilhaft ermöglichen die erläuterten Maßnahmen
- eine umfassendere Betrachtung von Maschinenzuständen während des Betriebs der Anlage,
- eine unmittelbare (online) Reaktion auf ungünstige oder kritische Maschinenzustände,
- eine Verbesserung der Verfügbarkeit der verfahrenstechnischen Anlage sowie
- eine in einem Operator-System voll integrierte Möglichkeit zur Überwachung von Maschinenzuständen mit entsprechender Skalierbarkeit bzgl. Wartung und Maschinenüberwachung.

## Patentansprüche

1. Verfahren zur Überwachung der Zustände von Geräten eines Automatisierungssystems, wobei in Prozessabbildern (20) von zur Prozessführung und -beobachtung vorgesehenen Operator-Systemen (2, 3, 4) den Geräten zugeordnete Prozessobjekte gespeichert sind, in welchen Prozessdaten (25, 26) der Geräte hinterlegt sind, **dadurch gekennzeichnet, dass**
- dem Prozessobjekt (19) eines zu überwachenden Gerätes (13) eine Komponente (21) im Prozessabbild (20) des Operator-Systems (3, 4) zugewiesen wird, wobei die Komponente (21) auf dieses Prozessobjekt (19) und auf weitere Prozessobjekte von Geräten referenziert, deren Prozessobjekte in diesem Prozessabbild (20) und/oder in weiteren Prozessabbildern hinterlegt sind, und
- die Prozessdaten (25, 26) aus den referenzierten Prozessobjekten (19, ...) ausgelesen und zur Überwachung des Zustands des zu überwachenden Gerätes ausgewertet werden.

2. Verfahren nach Anspruch 1, **dadurch gekennzeichnet, dass** in der Komponente (21) Befehle und Anweisungen zur Verarbeitung der Prozessdaten hinterlegt werden, wobei die Prozessdaten entsprechend den Befehlen und Anweisungen mittels einer Überwachungskomponente (31) verarbeitet werden.

3. Verfahren nach Anspruch 1 oder 2, **dadurch gekennzeichnet, dass** zur Verarbeitung der Prozessdaten und archivierter Prozessdaten mittels eines PH Clients (33) der Überwachungskomponente (31) die archivierten Prozesseingangswerte eines Archivierungs-Servers (5) ausgelesen werden.

4. Ein zur Prozessführung und -beobachtung vorgesehenes Operator-System (3, 4) für ein Automatisierungssystem, wobei in dem Operator-System (3, 4) ein Prozessabbild (20) gespeichert ist, in welchem Prozessdaten von Geräten des Automatisierungssystems hinterlegt sind, **dadurch gekennzeichnet, dass**
- in dem Operator-System (3, 4) dem Prozessobjekt (19) eines zu überwachenden Gerätes (13) eine Komponente (21) im Prozessabbild (20) zugewiesen ist, die auf dieses Prozessobjekt (19) und auf weitere Prozessobjekte von Geräten referenziert, deren Prozessobjekte in diesem Prozessabbild (20) und/oder in weiteren Prozessabbildern von weiteren Operator-Systemen hinterlegt sind, und
- die Komponente (21) dazu ausgebildet ist, die Prozessdaten aus den referenzierten Prozessobjekten auszulesen und zur Verarbeitung einer Überwachungskomponente (31) des Operator-Systems (3, 4) bereitzustellen.

5. Operator-System nach Anspruch 4, **dadurch gekennzeichnet, dass** in der Komponente (21) Befehle und Anweisungen zur Verarbeitung der Prozessdaten hinterlegt sind, wobei die Überwachungskomponente (31) die Prozessdaten entsprechend den Befehlen und Anweisungen verarbeitet.

6. Operator-System nach Anspruch 4 oder 5, **dadurch gekennzeichnet, dass** zur Verarbeitung der Prozessdaten und archivierter Prozessdaten ein PH Client (33) der Überwachungskomponente (31) die archivierten Prozessdaten eines Archivierungs-Servers (5) ausliest.

7. Automatisierungssystem mit mindestens zwei Operator-Systemen nach einem der Ansprüche 4 bis 6.
